(19)

Europäisches
Patentamt
European
Patent Office
Office européen
des brevets

(11) **EP 4 554 104 A1**

(12) **EUROPEAN PATENT APPLICATION**

(43) Date of publication:
**14.05.2025 Bulletin 2025/20**

(21) Application number: **23209053.0**

(22) Date of filing: **10.11.2023**

(51) International Patent Classification (IPC):
**H04B 7/0452** (2017.01)      **H04W 72/121** (2023.01)

(52) Cooperative Patent Classification (CPC):
**H04B 7/0452; H04W 72/121**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **COLLETTI, Robert
  Draveil (FR)**
• **MUDLAPPA, Prasanna
  Bangalore (IN)**
• **BEDEKAR, Anand
  Glenview (US)**

(74) Representative: **Nokia EPO representatives
Nokia Technologies Oy
Karakaari 7
02610 Espoo (FI)**

(54) **PACKET SCHEDULER**

(57)    An apparatus comprising at least one processor, and at least one memory for storing instructions that, when executed by the at least one processor, cause the apparatus at least to perform: obtaining information about a plurality of user equipments (UE) to be scheduled for a communication in a communication network, generating two or more UE sublists by splitting the plurality of UEs and placing each of the plurality of UEs into at least one UE sublist, the splitting being based on a processing considering an interference parameter, dividing available communication resources of the communication network in accordance with the generated two or more UE sublists and allocating a part of the resources to each of the UE sublist, executing a parallelization of scheduling processing by generating one processing thread per each UE sublist, and conducting a scheduling processing for each UE sublist in the corresponding processing thread.

FIG. 3

**Description**

**FIELD**

Examples of embodiments described herein relate to apparatuses, methods, systems, computer programs, computer program products and (non-transitory) computer-readable media usable for conducting a packet scheduling processing for a plurality of communication elements, such as user equipment (UE) devices, in a communication network. In particular, some examples of embodiments relate to apparatuses, methods, systems, computer programs, computer program products and (non-transitory) computer-readable media usable for a mechanism which enables an improved scheduling processing for a plurality of UEs for data transfer/reception in downlink and uplink direction.

**BACKGROUND**

The following description of background may include insights, discoveries, understandings or disclosures, or associations, together with disclosures that are not already known, but rather provided herein by the disclosure as one or more examples of embodiments. Some of examples of embodiments may be specifically pointed out below, whereas other of such contributions will be apparent from the related context.

**SUMMARY**

According to an example of an embodiment, there is provided, for example, an apparatus comprising at least one processor, and at least one memory for storing instructions that, when executed by the at least one processor, cause the apparatus at least to perform: obtaining information about a plurality of user equipments (UEs), to be scheduled for a communication in a communication network, generating two or more UE sublists by splitting the plurality of UEs and placing each of the plurality of UEs into at least one UE sublist, the splitting being based on a processing considering an interference parameter, dividing available communication resources of the communication network in accordance with the generated two or more UE sublists and allocating a part of the resources to each of the UE sublist, executing a parallelization of scheduling processing by generating one processing thread per each UE sublist, and conducting a scheduling processing for each UE sublist in the corresponding processing thread.

Furthermore, according to an example of an embodiment, there is provided, for example, a method comprising obtaining information about a plurality of user equipments (UEs) to be scheduled for a communication in a communication network, generating two or more UE sublists by splitting the plurality of UEs and placing each of the plurality of UEs into at least one UE sublist, the splitting being based on a processing considering an interference parameter, dividing available communication resources of the communication network in accordance with the generated two or more UE sublists and allocating a part of the resources to each of the UE sublist, executing a parallelization of scheduling processing by generating one processing thread per each UE sublist, and conducting a scheduling processing for each UE sublist in the corresponding processing thread.

According to further refinements, these examples may include one or more of the following features:

- a pre-scheduling processing may be conducted in which a specified number of UEs being eligible for scheduling in each communication slot is selected, wherein the information about the plurality of UEs is obtained as a result of the pre-scheduling processing;
- for the processing considering the interference parameter used for generating the two or more UE sublists, a processing based on a correlation matrix or a processing based on a beam-to-beam interference parameter may be used;
- when using, for the processing considering the interference parameter used for generating the two or more UE sublists, a processing based on a correlation matrix, a matrix comprising all UEs in the obtained information may be built, the UEs may be sorted in a descending order based on a predetermined sorting parameter, a correlation value across the first two UEs of the sorted UEs may be calculated, it may be decided whether the two UEs can be paired on the basis of a comparison between the determined correlation value and a preset threshold value, if it is decided that the two UEs can be paired, the two UEs may be placed into the same UE sublist, and if it is decided that the two UEs cannot be paired, the two UEs may be placed into different UE sublists, a correlation value across the third and each following UE of the sorted UEs and each UE contained in each UE sublist may be calculated, and the following UE may be placed in the UE sublists where an average correlation value is smaller;
- the predetermined sorting parameter may be a quality of service class identifier allocated to each UE;
- when using, for the processing considering the interference parameter used for generating the two or more UE sublists, a processing based on a beam-to-beam interference parameter, a predetermined interference parameter defining statically a beam-to-beam interference related to an antenna array network used for communication of the UEs may be obtained, and a UE may be placed in a corresponding one of the two or more UE sublists on the basis of a comparison of the obtained predetermined interference parameter for each UE;

- when each UE is placed into a UE sublist, it may be checked if any of the two or more UE sublists comprises a higher number of UEs than the others of the two or more UE sublists, if at least one of the two or more UE sublists comprises a higher number of UEs, a balancing processing for balancing a workload of each processing thread generated per each of the two or more UE sublists to each other may be conducted;

- for conducting the balancing processing, it may be checked whether the at least one UE sublist comprising the higher number of UEs includes a UE being identified, as a result of the processing considering the interference parameter for splitting the plurality of UEs, to be placeable also into another UE sublist, if the check results that there is identified at least one UE being placeable into another UE sublist, the identified UE may be changed to the other UE sublist for balancing the number of UEs in each UE sublist, and if the check results that there is identified no UE being placeable into another UE sublist, one or more of the last UEs being placed into the UE sublist comprising the higher number of UEs may be placed into another UE sublist for balancing the number of UEs in each UE sublist;

- when each UE is placed into a UE sublist, it may be determined, in each UE sublist, whether there is any UE having a buffer size being greater than a buffer threshold, if there is determined a UE having a buffer size being greater than the buffer threshold, it may be checked whether the determined UE is pairable with another UE of at least one other UE sublist, based on the processing considering the interference parameter for splitting the plurality of UEs, and, if the determined UE is pairable with another UE of at least one other UE sublist, the determined UE may be placed in each of the originally selected UE sublist and the at least one other UE sublist;

- it may be checked whether a number of UEs being placed in more than one UE sublists is equal to or lower than a predefined threshold, in case the number of UEs being placed in more than one UE sublists is equal to or lower than the predefined threshold, placing the determined UE in each of the originally selected UE sublist and the at least one other UE sublist may be allowed, or in case the number of UEs being placed in more than one UE sublists is not equal to or lower than the predefined threshold, a processing for placing UEs in each of the originally selected UE sublist and another UE sublist may be stopped;

- when dividing the available communication resources of the communication network in accordance with the generated two or more UE sublists, the part of the resources to be allocated to each of the UE sublist may be determined by considering at least one of the following: an accumulated amount of data to be transmitted to the UEs in each UE sublist, presence of traffic having a guaranteed bitrate and traffic having not a guaranteed bitrate, wherein traffic having a guaranteed bitrate is prioritized in resource allocation, or a determination result of a current buffer size of active UEs, wherein required resources for newly arrived data are estimated;

- it may be determined whether any UE is present in more than one UE sublist, and in case there is at least one UE being present in more than one UE sublist, the buffer size of the UE comprised in more than one UE sublist may be divided by the number of sublists comprising the UE, and the result of the division may be considered as the buffer size of the UE for resource allocation processing;

- in each generated processing thread per each UE sublist, the following may be conducted: a time division scheduling processing, a multi-user pairing processing in which the UEs contained in one UE sublist are paired on the basis of the interference parameter, a signal processing related to antenna relay network properties, a zero-forcing processing, a beam forming processing, a frequency division multiplexing processing, or a resource block group allocation;

- the multi-user pairing processing may be conducted before conducting the a frequency division multiplexing processing;

- after executing the parallelization of the scheduling processing by generating one processing thread per each UE sublist and conducting at least a part of the scheduling processing for each UE sublist in the corresponding processing thread, outputs of each of the processing threads may be joined for forming a single processing thread considering all UEs combined in one single UE sublist, and remaining communication resources being left unused in any of the parallel processing threads may be allocated to UEs in the single UE sublist;

- after allocating the remaining communication resources, a further parallelization of scheduling processing may be executed by generating one processing thread per each UE sublist according to the generated two or more UE sublists, and a scheduling processing for each UE sublist in the corresponding processing thread may be conducted after the further parallelization;

- in each generated processing thread per each UE sublist, at least one of the following may be conducted: calculating a final modulation and coding scheme, calculating a transmission power, conducting a post-frequency division processing;

- a result of each processing thread per each UE sublist may be provided to a physical layer for transmission processing according to a scheduling result;

- the number of the plurality of UEs and the number of UEs to be placed into a UE sublist may be determined beforehand in accordance with a processing capacity usable per each processing thread;

- each processing thread may be executed by one of a respective core of a central processing unit of system on chip architecture, a respective hyperthread, or a respective arithmetic logic unit pipeline;

- the apparatus or processing may be comprised in a packet scheduler of a communication network control element or communication network control function controlling a communication cell of the communication network.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of: upload; download; and/or push procedures.

## BRIEF DESCRIPTION OF THE DRAWINGS

Some examples of disclosure related to embodiments are described below, by way of example only, with reference to the accompanying drawings, in which:

Fig. 1 shows a diagram illustrating an example for a communication scenario according to examples of embodiments;

Fig. 2 shows a diagram illustrating a configuration of a packet scheduler according to a comparative example;

Fig. 3 shows a diagram illustrating a configuration of a packet scheduler according to examples of embodiments;

Fig. 4 shows a flow chart of a processing conducted in a packet scheduler according to some examples of embodiments; and

Fig. 5 shows a diagram of a communication network control element acting as a packet scheduler according to some examples of embodiments.

## DETAILED DESCRIPTION

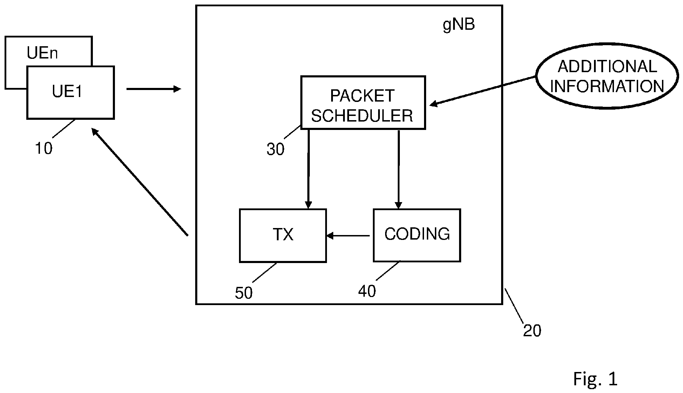

Fig. 1 illustrates a diagram illustrating an example for a communication scenario according to examples of embodiments. Specifically, Fig. 1 shows an example where a plurality of UEs 10 are connected to a communication network control element 20, such as a base station of the communication network, like a g-NodeB (gNB). The UEs are connected to a communication network (e.g., a public land mobile network (PLMN)) and are configured, for example, to communicate with other UEs. The communication network includes, besides a radio access network, a core network (CN). The CN provides the overall control of the UE and establishment of bearers. Routing and forwarding of user data packets between network nodes and a connection of the network with other Internet protocol (IP) networks are tasks conducted by the CN, for example.

In some 5G or 6G 3rd Generation Partnership Project (3GPP) systems, the gNB is an access network element and allows access of a UE to the communication network. Amongst other functions, the gNB implements a Layer-2 packet scheduler functionality and is responsible for scheduling UEs (in 'time and frequency' domain) for data transfer/receive in downlink and uplink. That is, the gNB serves, amongst other tasks, for scheduling transmission of data to and from the UEs (i.e., in uplink and downlink direction) with the resources being available for a communication via an air interface, for example. For this purpose, the gNB 20 comprises a packet scheduler 30.

The packet scheduler 30 receives, for example, a quality indication report from the UEs connected to the gNB 20. It is to be noted that the packet scheduler 30 may also receive other information, for example from the core network or a storage element, which are usable for the scheduling process, as described at least in reference to Fig.. The packet scheduler 31 uses the information to make scheduling decisions and allocates resources for the respective communications to be conducted by the UEs. A coding function 40 is used to choose a suitable modulation and coding Scheme (MCS) for transmission of the scheduled users. User information, resource allocation and coding schemes are then sent via a transmission TX element 50 to the UEs 10, e.g., by using a physical downlink control channel (PDCCH). The UEs 10 decode the PDCCH payload to check whether it is scheduled so that it can access the correct communication resources. These series of operations are repeated at each transmission time interval (TTI).

Packet scheduling is a real-time processing and should be completed in a stipulated slot duration based on the respective numerology (as an example, it is 500 $\mu$s slot in frequency range 1 (FR1) time division (TD) duplex (TDD)). The packet scheduler functionality is implemented, for example, on SoCs that have multiple cores.

However, a single thread (or core) performance is not progressing much, forcing the gNB developers to look for other avenues to process more but still be able to fit all the layer-2 processing within the slot boundary. The reason is that any delay in packet scheduler processing would result in reduced time for L1 processing and may result in transmission delay in that slot, which is not desired as it result not only in a waste of air interface resources which would be unused, but also other problems such as an impact on block error rate (BLER) as a hybrid automatic repeat request (HARQ) timing window is skipped.

Thus, it is obvious that a layer-2 packet scheduler processing is challenging as there is an enormous amount of real-time processing to be finished in each slot or TTI on central processing unit (CPU) core(s) that have a limited processing capability (or limited single thread performance).

In order to increase system capacity of communication networks, techniques like multi user - multiple input multiple output (MU-MIMO) are implemented. MU-MIMO allows to increase system capacity with massive MIMO, but is computationally expensive as the required processing power grows with number of paired UEs, number of UEs scheduled per slot and number of layers.

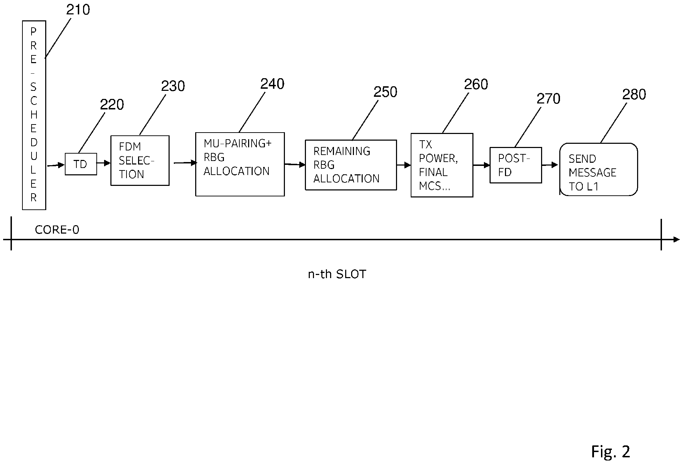

Currently, packet schedulers are typically implemented in a single thread configuration, which will be explained with regard to Fig. 2. The reason for using the single thread configuration is to ensure deterministic behavior.

As shown in Fig. 2, a layer-2 packet scheduler comprises the following functional blocks. It is to be noted that Fig. 2 shows a process sequence in one time slot (e.g., n-th slot) which is repeated for each slot, as indicated above. The processing thread for the packet scheduling processing is assumed to be executed, for example, by a single core 0 of the SoC used for the packet scheduler.

A pre-scheduler 210 is used to select UEs and to build a candidate list CS-1 which has, for example, 50 UEs. Then, a TD processing function 220 calculates proportional fair (PF) metrics and TD metrics and selects a specific number N (e.g., 16) of UEs for frequency division (FD) processing (for example, N is based on processing capability, amount of frequency resources being available for allocation). Block 230 represents a FDM (frequency division multiplex) selection for selecting frequency related resources. Block 240 defines MU pairing and RGB allocation for the UEs being processed. In block 250, remaining RGB being not yet allocated are allocated to the UEs. In block 260, processing like TX power calculation, and MCS determination is conducted. In block 270, post-FD processing is executed. Finally, in block 280, the result of the scheduling processing is send to L1 in order to be provided, for example, to the UEs being scheduled.

As shown in Fig. 2, the layer-2 packet scheduler is typically implemented as single thread, to ensure deterministic behavior.

However, as described above, packet schedulers have real-time constraints, and with complex MU-MIMO calculations, it will be difficult to exploit MU-MIMO as far as possible while ensuring that real time constraints can be met.

Furthermore, in new communication systems based, e.g., on 6G specification, also new spectrum like FR3 is usable which will allow a larger number of antennas and thus offers higher capacity regarding MU processes, and offers also a larger bandwidth (going from 5G FR1's 100MHz to 400/500 MHz, for example). This will further increase the burden on the CPUs for MU-MIMO calculations. Furthermore, there will be other functions such as CA (carrier aggregation), URLLC (ultra reliable low latency communications), RAN (radio access network) slicing and the like which will also demand a higher number of calculations and CPU cycles.

However, the increase in CPU single-thread processing capabilities is limited, e.g., only by 1.3 times over the last few years, while the bandwidth increase is by a factor of 4, wherein also antenna array networks may increase by a factor of 4 (and spatial layers by a factor of 1.5-2) so that CPU single-thread processing capabilities are not keeping pace with increased demand.

That is, it is desired to increase the performance of a packet scheduling process in order to devise a way to exploit more of the MU-MIMO gain which requires complex computations, while leaving adequate headroom for computations related to other functions.

CPUs are developed which have more cores, but they do not have a much higher single-thread performance. In view of this, according to examples of embodiments, a configuration is considered which allows to overcome limitations on the capability and scalability of layer-2 packet scheduler functionality caused by the sequential processing as described in connection with the solution described in connection with Fig. 2.

According to examples of embodiments, a mechanism is proposed which conducts a packet scheduling processing wherein UEs to be scheduled for communication via a communication network as well as frequency resources (for example, resource block (RB) use or RB groups (RBGs)) being used for the communication and allocated to the respective UEs are divided or split into two or more subsets, such a UE sublists and resources allocated to the respective sublist. Then, each of the UE and resources sublist is used in a forking processing in which the sublists are distributed to a separate processing thread, i.e., each sublist is processed by an own core of a CPU used for processing, an own hyperthread or an own arithmetic logic unit (ALU) pipeline. For example, in case a 2-way parallelization is considered, there are generated two UE sublists with corresponding resource splitting, which are then distributed to two CPU cores for a processing in a corresponding processing thread. By means of this it is possible to improve the processing performance, e.g., in case of a 2-way parallelization, having an additional processing cycle helps to achieve close to 90% CPU gain compared to processing on a single core.

It is to be noted that the above indicated example of a 2-way parallelization is only for illustrative purpose, but the principles of parallelization considered in the examples of embodiments are also applicable to a higher number of parallel processing threads and thus a higher number of UE sublists and resources, i.e., to an 'N-way parallelization' as well. In other words, a packet scheduler processing according to examples of embodiments can be 'N-way parallelized". In the following, for the sake of convenience, examples are described for a case of N=2 as an example.

Specifically, according to examples of embodiments, a control element or control function being also defined as a 'fork manager (FM)' is introduced in the packed scheduling process. The FM determines or pre-calculates pairable sets of UEs to be scheduled. This processing is executed either in real-time or can be done, at least in part, in an offline/non-real-time manner, e.g., when pairings of specific UEs can be predetermined and a corresponding information is made available to the FM.

That is, in a processing according to examples of embodiments, a specified number of UEs is obtained, e.g., from a pre-scheduler function of the packet scheduler element. The specified number can be, for example, a preset number or may be determined according to other factors, such as in baseband pooling case where processing resources are pooled across cells, the number of UEs specified by the pre-scheduler function for CS1 (candidate set 1) is set depending on the load of various cells. Then, two subsets or sublists of the UEs are generated according to specified criteria. For example, the generation of the respective subsets takes into account any pre-pairing info already known (e.g., if UE 1 and UE 2 are already known to be good pairing candidates, then both can be kept in the same sublist or set, i.e., used for the same processing thread. Furthermore, for a case where no pre-pairing information is known, the FM uses an interference based parameter, such as a UE or beam correlation table (based on respective interference details), which is used to make a coarse pairing likelihood assessment. By means of this measure, it is possible that to ensure that there is no considerable loss in MU gain and hence a drop in spectral efficiency (SE) or cell throughput can be avoided. Spectral efficiency refers to an information rate that can be transmitted over a given bandwidth in a specific communication system and defines how efficiently a limited frequency spectrum is utilized by the physical layer protocol, for example. Furthermore, workload balancing across the two (or more) processing threads is achievable so that both of the threads are able to finish a corresponding processing related to the packet scheduling at (almost) the same time.

It is to be noted that in some cases, there is a chance that hard partitioning of the set of UEs may lead to some loss in SE. In particular, when one UE is full buffer and the rest of the UEs are small buffer, then the following process may apply. In such a case, it is advantageous to place the full buffer UE to be on both sides (i.e., sublists or subsets) instead of assigning it to only one sublist. By means of this, it is possible to avoid wasting RBGs, that is, it is facilitated to use up any resources (RBGs) that were left unused on one side by allocating to UEs on the other side if they have excess data.

In a next phase, frequency resources (RBGs) are split into two sets (i.e., a number of sets corresponding to the number of sublists into which the UEs are split). In other words, one set of resources is used for each set of UEs. The splitting and thus assignment of the resources is based, for example, on the sublists' requirements (for example, the amount of current data in buffer, a data arrival rate, a type of the traffic, guaranteed bit rage/non-guaranteed bitrate (GBR/NonGBR), etc.). According to examples of embodiments, if not enough resources are available to meet the demand, the available resources are apportioned accordingly.

When the FM has completed the UE and resource splitting, there are now two (or more) candidate lists (CS-1 lists). For example, each list of UEs may have a size of, for example, 30 to 40 UEs are made, but the actual number may depend on various variables, such as number of UEs to be scheduled, processing performance of the packet scheduler, load situation and the like. Then, based on the candidate lists, a parallelization process is made for forking the processing threads. Next, a TD processing is done for the UEs of each list, in each of the processing threads.

For example, in each processing thread, at first a MU-pairing is made, in which all UEs in the corresponding CS-1 list are considered. As a result, a CS-2 list for FDM selection is prepared. By means of this, the spectral efficiency can be increased significantly as the UEs with a better MU-pairing are considered. For example, combined PF metrics (of MU paired UEs) are considered. In case of a single user (SU), PF metric will keep on building up for those UEs that does not get considered for scheduling, and over a time will become more than a combined PF metric of MU paired UEs so that also single users get the opportunity for being scheduled.

In a next phase, according to examples of embodiments, a signal processing like a zero-forcing (ZF) process is employed in each thread after the vUe construction (MU-pairing). Zero-forcing (optimal beam forming) after the vUe construction (MU-pairing) is useful in being more aggressive in the initial correlation calculation in terms of allowing UEs into each thread (say, even if UE1 and UE2 have some medium correlation, it is still allowable to put them into same thread as ZF will be done). Zero-forcing on a high number of antennas is a significantly complex process with matrix multiplication and inverse operations but helps to enhance the cell throughput. This is possible as more processing headroom is created.

It is to be noted that in a typical L2 packet scheduling implementation using one single thread, typically, 50 UEs are considered for TD processing, because of the processing overhead involved. According to examples of embodiments, as more processing cycles are available because of the usage of additional cores (i.e., processing threads), more UEs can be considered for TD processing (for example, each thread can process up to 40 UE so that in combination there are 80 UEs from both threads, so that the multi-user diversity can be leveraged).

According to examples of embodiments, it is also possible to 'join' the different parallel processing threads again so as to generate a single processing thread again. Such a joining can be considered, for example, before a 'remaining RBG allocation' step, and allows to make use of any RBGs left unused in any of the parallelized processing threads. This is in particular useful for the above indicated overlapping UEs case. Moreover, after such a joining process, it is also possible to make a further forking into corresponding processing threads, i.e., to parallelize again the processing into two (or more) processing threads for executing remaining tasks like a final MCS calculation, a power calculation and the like. Such a further forking can be useful, such as after reconciling RBG allocations across both threads.

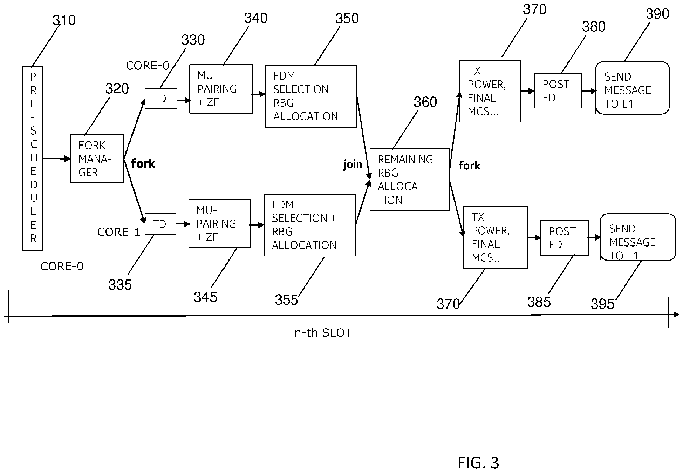

Fig. 3 shows a diagram illustrating a layer-2 packet scheduler according to examples of embodiments. Specifically, the layer-2 packet scheduler according to Fig. 3 is illustrated in a case where a 2-way parallelization is considered as an example. It is to be noted that Fig. 3 shows a process sequence in one time slot (e.g., n-th slot) which is repeated for each slot, as indicated above. Furthermore, the parallelized processing (i.e., the respective processing threads) for the packet scheduling processing are assumed to be executed, for example, by a two CPU cores (core 0 and core 1) of a SoC used for the packet scheduler.

Specifically the layer-2 packet scheduler according to examples of embodiments conducts a processing where the UEs are split into two lists and also the frequency resources (RBGs) to be used are split according to these two lists. The corresponding processing is executed in a functional block referred to as 'fork manager' (FM).

A pre-scheduler 310 is used to select UEs and to build a candidate list. Specifically, the pre-scheduler 310 is responsible for selecting UEs that are eligible for scheduling (for example, based on certain criteria and considering that data are in the buffer). The pre-scheduler 310 keeps updating the list in every slot. The list has, for example, a predetermined number (limit) of 'N' UEs which depends primarily on the consideration that in case more UEs are added to the list then the TD processing consumes more CPU cycles and hence the overall downlink scheduler execution time will increase, for example. Thus, the number of UEs can be either preset (e.g., 80) or determined in a variable manner when the TD processing load caused by the UEs can be estimated to be under a certain threshold or the like.

Next, fork manager 320 follows. The FM 320 is responsible for splitting UEs and frequency resources into a corresponding number of sets (e.g., two UE sublists in the present case), wherein the splitting is made under consideration that there is good opportunity for MU-pairing. By means of this, it is possible to reduce the impact on SE (spectral efficiency) or cell throughput. Furthermore, balancing the work-load across the two (or more) parallelized threads is considered in the generation of the UE sublists, e.g., by considering a buffer size of the UEs or by placing an equal number of UEs in each thread.

That is, the FM 320 conducts, once the pre-scheduler 310 selects the UEs that are eligible for scheduling and informs the FM 320 accordingly, a splitting processing for the UEs and frequency resources for putting or placing the UEs into two sets.

For example, for splitting the UEs into two lists, a correlation matrix A can be built first for the UEs that are eligible for scheduling (as decided by the pre-scheduler). A correlation (interference) threshold, which is set beforehand or determined by the packet scheduler or another network element depending on corresponding parameters, is then used to split UEs into separate lists. It is to be noted that according to examples of embodiments, the threshold used in the UE splitting process may be the same as the threshold to be used in MU-pairing (described later). That is, the splitting is based on a determination regarding the interference on UE1 because of the presence of UE2, and vice-versa.

A correlation matrix A may have the following format:

$$A = \begin{bmatrix} a_{11} & a_{12} & \cdots\cdots & a_{1n} \\ a_{21} & a_{22} & \cdots\cdots & a_{2n} \\ \vdots & \vdots & \vdots & \vdots \\ a_{m1} & a_{m2} & \cdots\cdots & a_{mn} \end{bmatrix},$$

where $a_{ij}$ represents interference on UE 'i' because of the presence of UE 'j' (or from UE 'j').

From the matrix A indicated above, a max correlation across any two UEs is now considered in connection with the threshold. For example, for UEs x and y, the max correlation between the two UEs is

**corr_max(x, y) = max(corr(x, y), corr(y, x))**

For example, the following process can be executed. First, the UEs are sorted in a descending order according to a specified parameter, for example according to their quality of service class identifier (QCI) metric, so that basically the highest priority UEs are first listed. The reason for this is to make sure that UEs with higher priority are considered on priority to construct vUEs. For example, a sorted list of UEs has a form like {UE1, UE2, UE5, UE15, ........UEn}, e.g., depending on the respective priorities of the UEs.

Next, the first two UEs are considered. That is, the first two UEs of the list are used for calculating a correlation from the above indicated "corr_max". In case the result is that these two UEs can be paired (e.g., when the threshold is not exceeded), then these two UEs are put into the same sublist, e.g., into list-1. On the other hand, in case it is determined that they cannot be paired, then the UEs are put into different sublists, e.g., UE1 is placed into UE sublist1 while UE2 is placed into UE sublist2.

Then, the third UE of the list is taken and checked with regard to its correlation with all existing UEs in sublist1, wherein the average correlation is calculated therebetween. The same process is executed for the existing UEs in sublist2. Then, the checked UE (here, the third UE) is put into the sublist where the average correlation is small enough (or the smallest). These processing is repeated for all remaining UEs in the sorted list.

As a result, there are now two sublists generated.

It is to be noted that according to an alternative example of embodiments, the UE splitting process can be based also on another principle besides the correlation based processing.

For example, for splitting the UEs, for example for reducing complexity in the calculation processing, it is also possible that a beam-to-beam interference is used to split the UEs. For example, a "ue mapping to beam" can be considered. In a beam-to-beam related processing, each UE is mapped to some grid of beams from pre-defined dictionary of beams. That is, it is checked whether the UEs can be paired or not by defining beam-to-beam interference which is a parameter being defined statically and beforehand. Thus, the complexity of the calculation in this approach can reduced. That is, beam-to-beam interference is used instead of a correlation metric for splitting the UEs into the two (or more) sublists.

Next, according to examples of embodiments, a balancing process can be performed. For this, it is checked whether the workload caused by the UEs contained in one list is comparable to that caused by the UEs of the other list(s) in each of the processing threads. For example, it is checked whether any of the sublists has a higher amount of UEs. If this is the case, then in the list that has got more UEs, for example, the UEs in the sublist are checked for whether these UEs were qualified to be put into any of the two lists (e.g., when the result of the correlation was such that both lists comprises pairing candidates, or in case the difference in the obtained results for each sublist was smaller than a threshold or the like). In this case, those UEs are moved from one sublist to the other (i.e., to the sublist having fewer UEs) until the sublists get balanced. On the other hand, in case there is no UE in the sublist that has got more UEs that would be qualified to be put into both sublists earlier, then UEs at bottom of the sublist that has got more UEs are changed into the other sublist that has fewer UEs until the sublists are balanced.

It is to be noted that the balancing described above is related to balance the workload across the parallelized processing threads. In the above example, the workload is represented by the number of UEs in each list, but it is also possible to use other relations, such as the total number of layers of UEs in each of the sublists.

According to some examples of embodiments, in case there are at least some UEs that require, compared to the majority of other UEs, more frequency resources (RBGs), e.g., due to their buffer sizes, the following processing is conducted. In case some UEs requiring significantly more resources (e.g., based on a percentage to an average requirement, a threshold or the like usable for a corresponding decision), these UEs are put into more than one sublists, e.g., in both sublists in the present example, so as to enable an optimal utilization of RBG resources.

Specifically, in a corresponding processing, the FM 320 conducts, after splitting the UEs as outlined above into the two sublists, the following process. First, each UE sublist is sorted in descending order of UE's buffer size. For each UE (1 to j) in sublist1, it is checked whether UE $j$'s buffer size is greater than a buffer threshold (referred to as "buf_threshold"). Furthermore, it is checked whether a corresponding UE can pair with at least one UE in UE sublist2. If both checks are affirmative, then the corresponding UE $j$ is put also to sublist2 (i.e., it is present in both sublist1 and sublist2). It is to be noted that the determination regarding pairability is based again either the UE correlation or the beam-to-beam interference as described above.

Furthermore, it is to be noted that according to examples of embodiments the number of UEs being placed in more than one sublist in parallel is also limited. That is, a further check can be made so as to determine whether a maximum allowable number of UEs is placed in each list. As an example, the maximum allowable number is a specific threshold and may be a quarter of the total number of UEs contained in the sublist. For example, if the maximum number of UEs that can be scheduled per slot is 16, then the UEs in each UE sublist is 8. In such a case, it is allowable, for example, that 4 UEs can be put into the other list, if required. Like for sublist1, the same determination and possible duplication is also made for the UEs from sublist2, if required.

Then, each UE sublist is sorted in a descending order according to UE's TD-metric. Further processing, like as RGB splitting (described later) proportional to a total buffer size of each UE list is also conducted, wherein it is to be noted that for a UE which is present in both lists only half of buffer size in each list is considered for resource assignment. Also a later MU pairing (described later) for each UE sublist on its RBG resources is conducted.

Next, splitting of resources (resource block groups (RBGs) or physical resource blocks (PRBs)) into two (or more) sets according to the UE sublists is conducted by the FM 320.

That is, once the two UE sublists are made, the data (in bytes) waiting for transmission in each list are added up separately. The resulting value is then translated into a number of RBGs required, wherein the SE is taken into consideration. Accordingly, the available RBGs are split also into two sets. It is to be noted that the buffer sizes are considered to ensure that RBGs will not be wasted in any parallelised thread.

The algorithm to split RBGs into the corresponding sets (e.g., two sets) takes into consideration one or more, or each of the following aspects.

- Requirements of GBR and non-GBR traffic are taken into account, wherein preference is given to GBR traffic needs of the cells;
- The algorithm estimates the number of PRBs worth of traffic by using the current buffer length of the active UEs, and estimate of new data arrival;
- The algorithm takes into account the average SE realized by the currently active UEs, and uses an average cell SE for the new data arrival.

In the following, examples for calculating parameters for the resource splitting are described. Specifically, the following notations are used:

- 'i' is a running variable to indicate the UE sublist. When considering two UE sublists and 2-way parallelization, i is 1 or 2. However, as the same methodology can be extended to more than two sublists (processing threads), i may have also other values.
- 'j' is a running variable to indicate the UE in a UE sublist 'i'.
- *total_PRBs* - refers to total PRBs in the cell (or RBGs) to be split.
- *PRB Demand$_{GBR}$(i)* - refers to an estimated GBR PRB demand for UE sublist 'i'.
- *PRB Demand$_{NGBR}$(i)* - refers to an estimated Non-GBR PRB demand for UE sublist 'i'.
- *SE(j)* - refers to the spectral efficiency of *UE j* in bits per PRB (rank*SE corresponding to CQI*REs per PRB).
- *bufLen$_{GBR}$(j)* - refers to GBR data buffered for UE *j* at the time of decision.
- *bufLen$_{NGBR}$(j)* - refers to non-GBR data buffered for UE *j* at the time of decision.
- *AggDataArrival$_{GBR}$(i)* - refers to an estimated aggregate GBR new data arrival.
- *AggDataArrival$_{NGBR}$(i)* refers to an estimated aggregate non-GBR new data arrival.
- *AllocPRB(i)* - refers to PRBs allocated to UE sublist 'i'.
- S refers to a set of UE sublists in the cell.
- U(i) refers to a set of UEs in UE sublist 'i'.
- $\alpha$ refers to a weighting constant for the estimated new data arrival ($0 \leq \alpha \leq 1$) .

For calculating the PRB demand of UEs going into each sublist separately, wherein accounting for GBR and non-GBR traffic is considered separately.
For GBR, the following applies:

$$PRB\ Demand_{GBR}(i) = \sum_{j \in U(i)}(bufLen_{GBR}(j)/SE(j)) + \alpha * AggDataArrival_{GBR}(i)/SE_{cell})$$

Similarly, for non-GBR, the following applies:

$$PRB\ Demand_{NGBR}(i) = (\sum_{j \in U(i)}bufLen_{NGBR}(j)/SE(j) + \alpha * AggDataArrival_{NGBR}(i)/SE_{cell})$$

The UE sublist '*i*'s PRB allocation is determined as follows:
If $\sum_{i \in S}PRB\ Demand_{GBR}(i) > total\_PRBs$

$$AllocPRB(i) = (PRB\ Demand_{GBR}(i)/\sum_{k \in S}PRB\ Demand_{GBR}(k)) * (total\_PRBs)$$

Else

$$AllocPRB(i) = PRB\ Demand_{GBR}(i) + (PRB\ Demand_{NGBR}(i)/\sum_{k \in S}PRB\ Demand_{NGBR}(k)) * (total\_PRBs - \sum_{k \in S}PRB\ Demand_{GBR}(k))$$

Thus, the split resources are split and assigned to the corresponding UE sublist.
Once the UEs are split into two sublists and RBGs are allocated to each sublist, the FM 320 starts the 2-way parallelization as shown in Fig 3 ("fork"). Specifically, two processing threads are generated, e.g., one for core 0 and another for core 1. A CS-1 list (i.e., UE sublist) is provided to each parallelised thread. The size of the sublist can be decided based on the capability of the CPU cores used (for example, it may range from 30 to 40 UEs in each CS-1 list). It is to be noted that in case more UEs are considered in the CS-1 lists, this may leverage on the multi-user diversity.

Then, in each processing thread, a TD processing function 330, 335 calculates PF metrics and TD metrics.

In blocks 340 and 345, in each processing thread, a MU-pairing and ZF processing is executed. Ues are paired based on the correlation based or beam-to-beam interference based processing. For this, a suitable MU-pairing algorithm can be used which is already known and not described in further detail herewith. Furthermore, as described above, zero-forcing (optimal beam forming) is considered after the MU-pairing for allowing a more aggressive approach in the initial correlation calculation in the FM 320.

Blocks 350 and 355 represent a FDM selection for selecting frequency related resources and an RGB allocation for the UEs being processed.

After the FDM selection and RBG allocation in blocks 350 and 355, a 'join' is performed for combining the processing threads again to one processing thread so that the remaining RBG allocation in block 360 can be done. This allows to make use of any RBGs left unused in any of the parallelized processing threads.

After this step, a second forking is done so that the remaining processing like the final MCS calculation, Tx power calculation (in blocks 370, 375), post-FD processing (in blocks 380, 385) is also parallelized. The second forking is considered in particular since the remaining processes in blocks 370 to 385 is a per-UE processing and is suited for parallelization, i.e., processing in separated processing threads.

Finally, in blocks 390 and 395, the result of the scheduling processing is send to a physical layer, e.g., to L1, in order to be provided, for example, to the UEs being scheduled. It is to be noted that from a L1 perspective, now there are two scheduler instances for the same cell which could be sending scheduling commands to an L1 instance. The L1 then put together the information obtained from blocks 390 and 395 about scheduling across all the RBGs by synchronizing the process because L1 has to compute a common Fast-Fourier Transform (FFT) and so on.

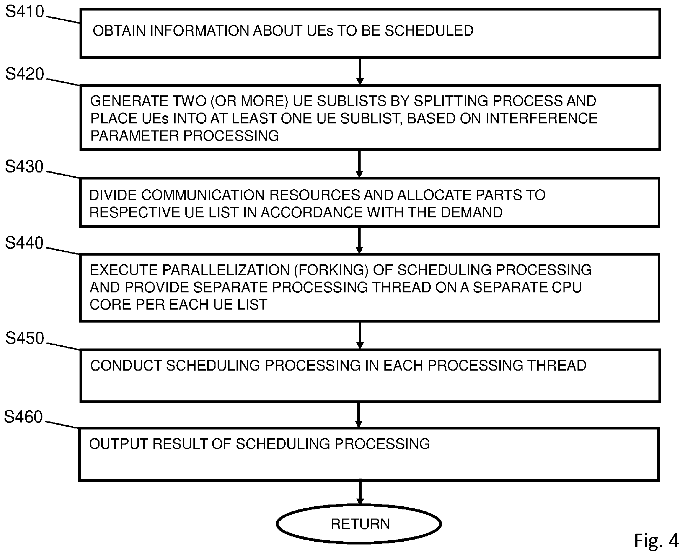

Fig. 4 shows a flow chart of a processing conducted in a communication network control element or communication network control which comprises a packet scheduler functionality, such as a gNB, which conducts a packet scheduling procedure according to some examples of the embodiments, as described in connection with Fig. 3.

In S410, information about a plurality of UEs to be scheduled for a communication in a communication network is obtained. According to examples of embodiments, the information about the plurality of UEs is obtained as a result of a pre-scheduling processing conducted in a pre-scheduler in a specified number of UEs being eligible for scheduling in each communication slot is selected, e.g., based on a preset number or according to a load situation.

In S420, two or more UE sublists are generated by splitting the plurality of UEs and placing each of the plurality of UEs into at least one UE sublist. The splitting is based on a processing considering an interference parameter.

For example, according to examples of embodiments, for the processing considering the interference parameter used for generating the two or more UE sublists, a processing is used which based on a correlation matrix or on a beam-to-beam interference parameter.

According to examples of embodiments, when using, for the processing considering the interference parameter used for generating the two or more UE sublists, a processing based on a correlation matrix, the following process can be executed. A matrix comprising all UEs in the obtained information is built. Then, the UEs are sorted in a descending order based on a predetermined sorting parameter. For example, as the sorting parameter, a QCI allocated to each UE is usable. Then, a correlation value across the first two UEs of the sorted UEs is determined or calculated. On the basis of a comparison between the determined correlation value and a preset threshold value, it is then deciding whether the two UEs can be paired. In case the two UEs can be paired, the two UEs are placed into the same UE sublist. Otherwise, if the two UEs cannot be paired, the two UEs are placed into different UE sublists. In the following, the remaining UEs are processed by determining a correlation value across the third and each following UE of the sorted UEs and each UE contained in each UE sublist. The following UEs are placed in that one of the UE sublists where an average correlation value is smaller.

On the other hand, according to examples of embodiments, when using, for the processing considering the interference parameter used for generating the two or more UE sublists, a processing based on a beam-to-beam interference parameter, the following is considered. First, a predetermined interference parameter defining statically a beam-to-beam interference related to an antenna array network used for communication of the UEs is obtained from a suitable source, e.g., by preconfigured information. Then, each UE is placed in a corresponding one of the two or more UE sublists on the basis of a comparison of the obtained predetermined interference parameter for each UE.

According to examples of embodiments, when each UE is placed into a UE sublist, it is checked if any of the two or more UE sublists comprises a higher number of UEs than the others of the two or more UE sublists. If at least one of the two or more UE sublists comprises a higher number of UEs, a balancing processing is conducted for balancing a workload of each processing thread generated per each of the two or more UE sublists to each other. For example, according to examples of embodiments, for conducting the balancing processing, it is checked whether the UE sublist comprising the higher number of UEs includes a UE being identified, as a result of the processing considering the interference parameter for splitting the plurality of UEs, to be placeable also into another UE sublist. If this is the case, the identified UE is changed to the other UE sublist for balancing the number of UEs in each UE sublist. Otherwise, if there is no UE being placeable into another UE sublist , one or more of the last UEs being placed into the UE sublist comprising the higher number of UEs are placed into another UE sublist for balancing the number of UEs in each UE sublist.

Moreover, according to examples of embodiments, when each UE is placed into a UE sublist, it is determined in each UE sublist, whether there is any UE having a buffer size being greater than a buffer threshold. If there is such a UE having a buffer size being greater than the buffer threshold, it is checked whether the determined UE is pairable with another UE of at least one other UE sublist, based on the processing considering the interference parameter for splitting the plurality of UEs. Moreover, In case the determined UE is pairable with another UE of at least one other UE sublist, this UE is placed in each (e.g., both) sublists, i.e., the originally selected UE sublist and the at least one other UE sublist. According to examples of embodiments, in order to limit the number of UEs being placed in each sublist, it is checked whether the number of UEs being placed in more than one UE sublists is equal to or lower than a predefined threshold (e.g., a quarter of the total number of UEs in the sublists). In case the number of UEs being placed in more than one UE sublist is equal to or lower than the predefined threshold, other UEs can be placed in more than one sublist, i.e., the previous processing is continued. Otherwise, in case the number of UEs being placed in more than one UE sublists is not equal to or lower than the predefined threshold, the above processing for placing UEs in more than one UE sublist is stopped.

After executing the parallelization of the scheduling processing in the forking, according to examples of embodiments, a joining is executed wherein outputs of each of the processing threads are joined for forming a single processing thread considering all UEs. Then, remaining communication resources (RGBs) being left unused in any of the parallel processing threads are allocated to UEs in the single UE sublist,

According to examples of embodiments executing, after allocating the remaining communication resources, a further parallelization of scheduling processing is executed by generating (again) one processing thread per each UE sublist according to the generated two or more UE sublists. This allows a better CPU gain for the remaining tasks of the scheduling processing. That is, after the forking, a scheduling processing for each UE sublist in the corresponding processing thread is executed. That is, according to examples of embodiments, in each (re-)generated processing thread per each UE sublist, at least one of the following processing can be executed: calculating a final MCS, calculating a transmission power, and conducting a post-FD processing.

In S460, a result of each processing thread per each UE sublist is presented to a physical layer (e.g., L1) for transmission processing according to a scheduling result.

According to examples of embodiments, the number of the plurality of UEs and the number of UEs to be placed into a UE sublist are determined beforehand in accordance with a processing capacity usable per each processing thread.

Furthermore, according to examples of embodiments, each processing thread is executed by one of a respective core of a central processing unit of system on chip architecture, a respective hyperthread, or a respective arithmetic logic unit pipeline.

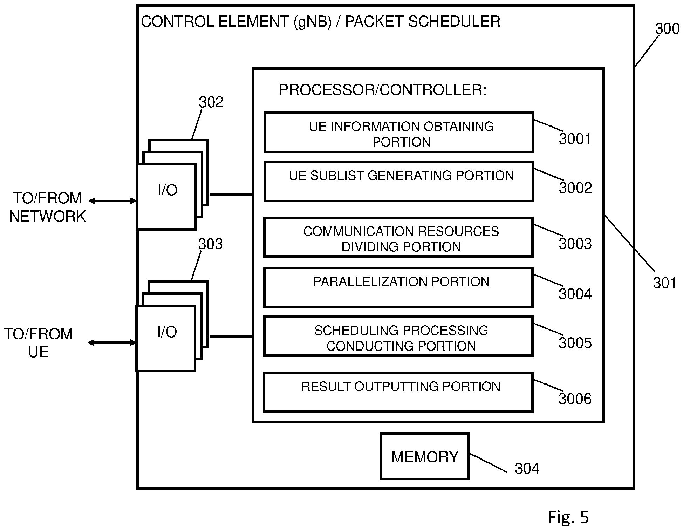

Fig. 5 shows a diagram of a network element or network function 300, such as a 5G or 6G network element or function, like a RAN element or function comprising a packet scheduler, which conducts a scheduling processing as a control entity according to some examples of the embodiments, as described in connection with Fig. 3. It is to be noted that the network element or function 300, such as the control element comprising the packet scheduler, may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The control element 300 shown in Fig. 5 may include a processing circuitry, a processing function, a control unit or a processor 301, such as a CPU or the like, which is suitable for executing instructions given by programs or the like related to the control procedure. The processor 301 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 302 and 303 denote input/output (I/O) units or functions (interfaces) connected to the processor or processing function 301. The I/O units 302 may be used for communicating with a network part. The I/O units 303 may be used for communicating with a UE, such as the UE 10. The I/O units 302 and 303 may be combined units including communication equipment towards several entities, or may include a distributed structure with a plurality of different interfaces for different entities. Reference sign 304 denotes a memory usable, for example, for storing data and programs to be executed by the processor or processing function 301 and/or as a working storage of the processor or processing function 301. It is to be noted that the memory 304 may be implemented by using one or more memory portions of the same or different type of memory.

The processor or processing function 301 is configured to execute processing related to the above described authorization procedure. In particular, the processor or processing circuitry or function 301 includes one or more of the following sub-portions. Sub-portion 3001 is a processing portion which is usable as a portion for obtaining UE information.

The portion 3001 may be configured to perform processing according to S410 of Fig. 4. Furthermore, the processor or processing circuitry or function 301 may include a sub-portion 3002 usable as a portion for generating UE sublists. The portion 3002 may be configured to perform a processing according to S420 of Fig. 4. In addition, the processor or processing circuitry or function 301 may include a sub-portion 3003 usable as a portion for dividing communication resources. The portion 3003 may be configured to perform a processing according to S430 of Fig. 4. Furthermore, the processor or processing circuitry or function 301 may include a sub-portion 3004 usable as a portion for conducting a parallelization. The portion 3004 may be configured to perform a processing according to S440 of Fig. 4. Moreover, the processor or processing circuitry or function 301 may include a sub-portion 3005 usable as a portion for conducting scheduling processing. The portion 3005 may be configured to perform a processing according to S450 of Fig. 4. In addition, the processor or processing circuitry or function 301 may include a sub-portion 3006 usable as a portion for outputting a result. The portion 3006 may be configured to perform a processing according to S460 of Fig. 4.

According to a further example of embodiments, there is provided, for example, an apparatus comprising means configured to obtain information about a plurality of user equipments (UEs), to be scheduled for a communication in a communication network, means configured to generate two or more UE sublists by splitting the plurality of UEs and placing each of the plurality of UEs into at least one UE sublist, the splitting being based on a processing considering an interference parameter, means configured to divide available communication resources of the communication network in accordance with the generated two or more UE sublists and allocating a part of the resources to each of the UE sublist, means configured to execute a parallelization of scheduling processing by generating one processing thread per each UE sublist, and means configured to conduct a scheduling processing for each UE sublist in the corresponding processing thread.

Furthermore, according to some other examples of embodiments, the above defined apparatus may further comprise means for conducting at least one of the processing defined in the above described methods, for example a method according to that described in connection with Fig. 4.

According to a further example of embodiments, there is provided, for example, a non-transitory computer readable medium comprising program instructions for causing an apparatus to perform a processing comprising obtaining information about a plurality of user equipments (UEs), to be scheduled for a communication in a communication network, generating two or more UE sublists by splitting the plurality of UEs and placing each of the plurality of UEs into at least one UE sublist, the splitting being based on a processing considering an interference parameter, dividing available communication resources of the communication network in accordance with the generated two or more UE sublists and allocating a part of the resources to each of the UE sublist, executing a parallelization of scheduling processing by generating one processing thread per each UE sublist, and conducting a scheduling processing for each UE sublist in the corresponding processing thread.

It is to be noted that in the above described examples a 6G packet scheduler is described for implementing the discussed scheduling process configuration. However, the same measures can be also applied in other packet schedulers, such as a 5G layer-2 packet scheduler, where complex applications, such as CA (carrier aggregation) cases, higher order MU-MIMO, URLLC applications, RAN slicing features and the like are to be considered.

Examples of embodiments, which are based on the above described elements, functions and operations, can be applied in various communication networks. In the last years, an increasing extension of communication networks, e.g., of wire based communication networks, such as the Integrated Services Digital Network (ISDN), Digital Subscriber Line (DSL), or wireless communication networks, such as the cdma2000 (code division multiple access) system, cellular 3rd generation (3G) like the Universal Mobile Telecommunications System (UMTS), fourth generation (4G) communication networks or enhanced communication networks based, for example, on Long Term Evolution (LTE) or Long Term Evolution-Advanced (LTE-A), fifth generation (5G) communication networks, sixth generation (6G) communication networks, cellular 2nd generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3rd Generation Partnership Project (3GPP), Telecoms & Internet converged Services & Protocols for Advanced Networks (TISPAN), the International Telecommunication Union (ITU), 3rd Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

For properly establishing and handling a communication between two or more endpoints (e.g., communication stations or elements, such as terminal devices, user equipments (UEs), or other communication network elements, a database, a server, host etc.), one or more network elements or functions (e.g., physical nodes or virtualized network functions), such as communication network control elements or functions, for example access network elements like access points, radio base stations, relay stations, eNBs, gNBs, etc., and core network elements or functions, for example control nodes, support nodes, service nodes, gateways, user plane functions, access and mobility functions etc., may be involved, which may belong to one communication network system or different communication network systems. However, it is to be noted that also a communication without intermediate network element is basically possible.

In communication networks, such as 3GPP based networks, in particular when a plurality of communication elements, such as UEs, communicate at the same time over the communication network, i.e., exchange data with other UEs or control elements of the communication network, it is necessary that the available communication resources, such as time and frequency related resources used for communication, are scheduled in a suitable manner, i.e., allocated and distributed to the respective UE according to its needs. For this purpose, so-called packet scheduling entities (packet schedulers) are implemented.

Different examples of embodiments have been described for illustrating a processing for conducting scheduling processes for a plurality of UEs. To this end, as one example of a communication network to which examples of embodiments may be applied, a communication network architecture based on 3GPP standards for a communication network, such as 5G or 6G, is used without restricting the disclosure to such an architecture. It would be apparent to a person skilled in the art that examples of embodiments may also be applied to other kinds of communication networks, e.g., Wi-Fi, worldwide interoperability for microwave access (WiMAX), Bluetooth®, personal communications services (PCS), ZigBee®, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but the principles of described herein can be extended and applied to any other type of communication network, such as a wired communication network as well.

The above examples and embodiments are to be understood only as illustrative examples. Although the text herein may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also comprise features, structures, units, modules etc., that have not been specifically mentioned.

A basic system architecture of a (tele)communication network, including a mobile communication system, where some examples of embodiments are applicable, may include an architecture of one or more communication networks, including wireless or wired access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB (E-UTRAN Node B) or a gNB (next generation Node B), a distributed or a centralized unit, which controls a respective coverage area or cell(s) and with which one or more communication stations (communication elements or communication functions) such as user equipments (UEs), e.g., user devices or terminal devices, or another device having a similar function, such as a modem chipset, a chip, a module, etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases, and the like, may be included.

The general functions and interconnections of the described elements and functions, which also depend on the actual network type, are understood by those skilled in the art and described in corresponding specifications so that a detailed description thereof is omitted herein. However, it is to be noted that several additional network elements and signaling links may be employed for communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g., an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element or network functions, such as a RAN node, a 5GC (5G core) node like an UDM, a UE, or other network elements or network functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are utilized for control, processing and/or communication/-signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g., ROM, RAM, EEPROM, and the like), input or interface means for inputting data and instructions by software (e.g., floppy disc, CD-ROM, EEPROM, and the like), a user interface for providing monitor and manipulation possibilities to a user (e.g., a screen, a keyboard and the like), other interface or means for establishing links and/or connections under the control of the processor unit or portion (e.g., wired and wireless interface means, radio interface means including, for example, an antenna unit or the like, means for forming a radio communication part, and so on) and the like, wherein respective means forming an interface, such as a radio communication part, can be also located on a remote site (e.g., a radio head or a radio station, and so on). It is to be noted herein that processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. For instance, a "division of labor" between involved network elements, functions or entities may vary case by case.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Furthermore, as used herein, "at least one of the following: " and "at least one of " and similar wording, where the list of two or more elements are joined by "and" or "or", mean at least any one of the elements, or at least any two or more of the elements, or at least all the elements.

According to a further aspect 1, a method is provided which comprises comprising:

obtaining information about a plurality of user equipments (UEs) to be scheduled for a communication in a communication network;
generating two or more UE sublists by splitting the plurality of UEs and placing each of the plurality of UEs into at least one UE sublist, the splitting being based on a processing considering an interference parameter;
dividing available communication resources of the communication network in accordance with the generated two or more UE sublists and allocating a part of the resources to each of the UE sublist;
executing a parallelization of scheduling processing by generating one processing thread per each UE sublist; and
conducting a scheduling processing for each UE sublist in the corresponding processing thread.

According to a further aspect 2, a method according to aspect 1, further comprises:
conducting a pre-scheduling processing in which a specified number of UEs being eligible for scheduling in each communication slot is selected, wherein the information about the plurality of UEs is obtained as a result of the pre-scheduling processing.

According to a further aspect 3, a method according to aspect 1 or 2 further comprises
using, for the processing considering the interference parameter used for generating the two or more UE sublists, a processing based on a correlation matrix or a processing based on a beam-to-beam interference parameter.

According to a further aspect 4, a method according to aspect 3 further comprises
when using, for the processing considering the interference parameter used for generating the two or more UE sublists, a processing based on a correlation matrix;

building a matrix comprising all UEs in the obtained information;
sorting the UEs in a descending order based on a predetermined sorting parameter;
calculating a correlation value across the first two UEs of the sorted UEs;
deciding whether the two UEs can be paired on the basis of a comparison between the determined correlation value and a preset threshold value;
if it is decided that the two UEs can be paired, placing the two UEs into the same UE sublist, and if it is decided that the two UEs cannot be paired, placing the two UEs into different UE sublists;
calculating a correlation value across the third and each following UE of the sorted UEs and each UE contained in each UE sublist; and
placing the following UE in that one of the UE sublists where an average correlation value is smaller.

According to a further aspect 5, in a method according to aspect 4, the predetermined sorting parameter is a quality of service class identifier allocated to each UE.

According to a further aspect 6, a method according to aspect 3 further comprises
when using, for the processing considering the interference parameter used for generating the two or more UE sublists, a processing based on a beam-to-beam interference parameter,

obtaining a predetermined interference parameter defining statically a beam-to-beam interference related to an antenna array network used for communication of the UEs; and
placing a UE in a corresponding one of the two or more UE sublists on the basis of a comparison of the obtained predetermined interference parameter for each UE.

According to a further aspect 7, a method according to any of aspects 1 to 6 further comprises

when each UE is placed into a UE sublist, checking if any of the two or more UE sublists comprises a higher number of UEs than the others of the two or more UE sublists,
if at least one of the two or more UE sublists comprises a higher number of UEs, conducting a balancing processing for balancing a workload of each processing thread generated per each of the two or more UE sublists to each other.

According to a further aspect 8, a method according to aspect 7 further comprises

for conducting the balancing processing, checking whether the at least one UE sublist comprising the higher number of UEs includes a UE being identified, as a result of the processing considering the interference parameter for splitting the plurality of UEs, to be placeable also into another UE sublist,
if the check results that there is identified at least one UE being placeable into another UE sublist, changing the identified UE to the other UE sublist for balancing the number of UEs in each UE sublist, and
if the check results that there is identified no UE being placeable into another UE sublist, changing one or more of the last UEs being placed into the UE sublist comprising the higher number of UEs into another UE sublist for balancing the number of UEs in each UE sublist.

According to a further aspect 9, a method according to any of aspects 1 to 8 further comprises

when each UE is placed into a UE sublist, determining, in each UE sublist, whether there is any UE having a buffer size being greater than a buffer threshold,
if there is determined a UE having a buffer size being greater than the buffer threshold, checking whether the determined UE is pairable with another UE of at least one other UE sublist, based on the processing considering the interference parameter for splitting the plurality of UEs, and,
if the determined UE is pairable with another UE of at least one other UE sublist, placing the determined UE in each of the originally selected UE sublist and the at least one other UE sublist.

According to a further aspect 10, a method according to aspect 9 further comprises

checking whether a number of UEs being placed in more than one UE sublists is equal to or lower than a predefined threshold,

in case the number of UEs being placed in more than one UE sublists is equal to or lower than the predefined threshold, allow placing the determined UE in each of the originally selected UE sublist and the at least one other UE sublist, or in case the number of UEs being placed in more than one UE sublists is not equal to or lower than the predefined threshold, stop a processing for placing UEs in each of the originally selected UE sublist and another UE sublist.

According to a further aspect 11, a method according to any of aspects 1 to 10 further comprises when dividing the available communication resources of the communication network in accordance with the generated two or more UE sublists, determining the part of the resources to be allocated to each of the UE sublist by considering at least one of the following:

an accumulated amount of data to be transmitted to the UEs in each UE sublist,
presence of traffic having a guaranteed bitrate and traffic having not a guaranteed bitrate, wherein traffic having a guaranteed bitrate is prioritized in resource allocation, or
a determination result of a current buffer size of active UEs, wherein required resources for newly arrived data are estimated.

According to a further aspect 12, a method according to aspect 11 further comprises

determining whether any UE is present in more than one UE sublist,
and in case there is at least one UE being present in more than one UE sublist, dividing the buffer size of the UE comprised in more than one UE sublist by the number of sublists comprising the UE, and considering the result of the division as the buffer size of the UE for resource allocation processing.

According to a further aspect 13, a method according to any of aspects 1 to 12 further comprises conducting, in each generated processing thread per each UE sublist, the following:

a time division scheduling processing,
a multi-user pairing processing in which the UEs contained in one UE sublist are paired on the basis of the interference parameter,
a signal processing related to antenna relay network properties,
a zero-forcing processing,
a beam forming processing,
a frequency division multiplexing processing, or
a resource block group allocation.

According to a further aspect 14, in a method according to aspect 13, the multi-user pairing processing is conducted before conducting the a frequency division multiplexing processing.

According to a further aspect 15, a method according to any of aspects 1 to 14 further comprises

after executing the parallelization of the scheduling processing by generating one processing thread per each UE sublist and conducting at least a part of the scheduling processing for each UE sublist in the corresponding processing thread, joining outputs of each of the processing threads for forming a single processing thread considering all UEs combined in one single UE sublist, and
allocating remaining communication resources being left unused in any of the parallel processing threads to UEs in the single UE sublist,

According to a further aspect 16, a method according to aspect 15 further comprises

executing, after allocating the remaining communication resources, a further parallelization of scheduling processing by generating one processing thread per each UE sublist according to the generated two or more UE sublists, and conducting a scheduling processing for each UE sublist in the corresponding processing thread after the further parallelization.

According to a further aspect 17, a method according to any of aspects 1 to 16 further comprises conducting, in each generated processing thread per each UE sublist, at least one of the following:

calculating a final modulation and coding scheme,
calculating a transmission power,

conducting a post-frequency division processing.

According to a further aspect 18, a method according to any of aspects 1 to 17 further comprises providing a result of each processing thread per each UE sublist to a physical layer for transmission processing according to a scheduling result.

According to a further aspect 19, in a method according to any of aspects 1 to 18, the number of the plurality of UEs and the number of UEs to be placed into a UE sublist are determined beforehand in accordance with a processing capacity usable per each processing thread.

According to a further aspect 20, in a method according to any of aspects 1 to 19, each processing thread is executed by one of

a respective core of a central processing unit of system on chip architecture,
a respective hyperthread, or
a respective arithmetic logic unit pipeline.

According to a further aspect 21, in a method according to any of aspects 1 to 20, the method is conducted in a packet scheduler of a communication network control element or communication network control function controlling a communication cell of the communication network.

Furthermore, a computer program comprising instructions for performing at least the method of any of aspects 1 to 21 is provided.

According to a further aspect 22, an apparatus is provided which comprises comprising:

at least one processor; and
at least one memory for storing instructions that, when executed by the at least one processor, cause the apparatus at least to perform:

obtaining information about a plurality of user equipments (UEs) to be scheduled for a communication in a communication network,
generating two or more UE sublists by splitting the plurality of UEs and placing each of the plurality of UEs into at least one UE sublist, the splitting being based on a processing considering an interference parameter,
dividing available communication resources of the communication network in accordance with the generated two or more UE sublists and allocating a part of the resources to each of the UE sublist,
executing a parallelization of scheduling processing by generating one processing thread per each UE sublist, and
conducting a scheduling processing for each UE sublist in the corresponding processing thread.

According to a further aspect 23, the apparatus according to aspect 22, wherein the instructions, when executed by the at least one processor, cause the apparatus at least to perform:
conducting a pre-scheduling processing in which a specified number of UEs being eligible for scheduling in each communication slot is selected, wherein the information about the plurality of UEs is obtained as a result of the pre-scheduling processing.

According to a further aspect 24, the apparatus according to aspects 22 or 23, wherein the instructions, when executed by the at least one processor, cause the apparatus at least to perform:
using, for the processing considering the interference parameter used for generating the two or more UE sublists, a processing based on a correlation matrix or a processing based on a beam-to-beam interference parameter.

According to a further aspect 25, the apparatus according to aspect 24, wherein the instructions, when executed by the at least one processor, cause the apparatus at least to perform:
when using, for the processing considering the interference parameter used for generating the two or more UE sublists, a processing based on a correlation matrix,

building a matrix comprising all UEs in the obtained information,
sorting the UEs in a descending order based on a predetermined sorting parameter,
calculating a correlation value across the first two UEs of the sorted UEs,
deciding whether the two UEs can be paired on the basis of a comparison between the determined correlation value and a preset threshold value,
if it is decided that the two UEs can be paired, placing the two UEs into the same UE sublist, and if it is decided that the two UEs cannot be paired, placing the two UEs into different UE sublists,
calculating a correlation value across the third and each following UE of the sorted UEs and each UE contained in each UE sublist, and
placing the following UE in the UE sublists where an average correlation value is smaller.

According to a further aspect 26, the apparatus according to aspect 25, wherein the predetermined sorting parameter is a quality of service class identifier allocated to each UE.

According to a further aspect 27, the apparatus according to aspect 24, wherein the instructions, when executed by the at least one processor, cause the apparatus at least to perform:
when using, for the processing considering the interference parameter used for generating the two or more UE sublists, a processing based on a beam-to-beam interference parameter,

obtaining a predetermined interference parameter defining statically a beam-to-beam interference related to an antenna array network used for communication of the UEs, and
placing a UE in a corresponding one of the two or more UE sublists on the basis of a comparison of the obtained predetermined interference parameter for each UE.

According to a further aspect 28, the apparatus according to any of aspects 22 to 27, wherein the instructions, when executed by the at least one processor, cause the apparatus at least to perform:

when each UE is placed into a UE sublist, checking if any of the two or more UE sublists comprises a higher number of UEs than the others of the two or more UE sublists,
if at least one of the two or more UE sublists comprises a higher number of UEs, conducting a balancing processing for balancing a workload of each processing thread generated per each of the two or more UE sublists to each other.

According to a further aspect 29, the apparatus according to aspect 28, wherein the instructions, when executed by the at least one processor, cause the apparatus at least to perform:

for conducting the balancing processing, checking whether the at least one UE sublist comprising the higher number of UEs includes a UE being identified, as a result of the processing considering the interference parameter for splitting the plurality of UEs, to be placeable also into another UE sublist,
if the check results that there is identified at least one UE being placeable into another UE sublist, changing the identified UE to the other UE sublist for balancing the number of UEs in each UE sublist, and
if the check results that there is identified no UE being placeable into another UE sublist, changing one or more of the last UEs being placed into the UE sublist comprising the higher number of UEs into another UE sublist for balancing the number of UEs in each UE sublist.

According to a further aspect 30, the apparatus according to any of aspects 22 to 29, wherein the instructions, when executed by the at least one processor, cause the apparatus at least to perform:

when each UE is placed into a UE sublist, determining, in each UE sublist, whether there is any UE having a buffer size being greater than a buffer threshold,
if there is determined a UE having a buffer size being greater than the buffer threshold, checking whether the determined UE is pairable with another UE of at least one other UE sublist, based on the processing considering the interference parameter for splitting the plurality of UEs, and,
if the determined UE is pairable with another UE of at least one other UE sublist, placing the determined UE in each of the originally selected UE sublist and the at least one other UE sublist.

According to a further aspect 31, the apparatus according to aspect 30, wherein the instructions, when executed by the at least one processor, cause the apparatus at least to perform:

checking whether a number of UEs being placed in more than one UE sublists is equal to or lower than a predefined threshold,
in case the number of UEs being placed in more than one UE sublists is equal to or lower than the predefined threshold, allow placing the determined UE in each of the originally selected UE sublist and the at least one other UE sublist, or
in case the number of UEs being placed in more than one UE sublists is not equal to or lower than the predefined threshold, stop a processing for placing UEs in each of the originally selected UE sublist and another UE sublist.

According to a further aspect 32, the apparatus according to any of aspects 22 to 31, wherein the instructions, when executed by the at least one processor, cause the apparatus at least to perform:

when dividing the available communication resources of the communication network in accordance with the generated two or more UE sublists, determining the part of the resources to be allocated to each of the UE sublist by considering at least one of the following:

an accumulated amount of data to be transmitted to the UEs in each UE sublist,
presence of traffic having a guaranteed bitrate and traffic having not a guaranteed bitrate, wherein traffic having a guaranteed bitrate is prioritized in resource allocation, or
a determination result of a current buffer size of active UEs, wherein required resources for newly arrived data are estimated.

According to a further aspect 33, the apparatus according to aspect 32, wherein the instructions, when executed by the at least one processor, cause the apparatus at least to perform:

determining whether any UE is present in more than one UE sublist,
and in case there is at least one UE being present in more than one UE sublist, dividing the buffer size of the UE comprised in more than one UE sublist by the number of sublists comprising the UE, and considering the result of the division as the buffer size of the UE for resource allocation processing.

According to a further aspect 34, the apparatus according to any of aspects 22 to 33, wherein the instructions, when executed by the at least one processor, cause the apparatus at least to perform:
conducting, in each generated processing thread per each UE sublist, the following:

a time division scheduling processing,
a multi-user pairing processing in which the UEs contained in one UE sublist are paired on the basis of the interference parameter,
a signal processing related to antenna relay network properties,
a zero-forcing processing,
a beam forming processing,
a frequency division multiplexing processing, or
a resource block group allocation.

According to a further aspect 35, the apparatus according to aspect 34, wherein the multi-user pairing processing is conducted before conducting the a frequency division multiplexing processing.
According to a further aspect 36, the apparatus according to any of aspect 22 to 35, wherein the instructions, when executed by the at least one processor, cause the apparatus at least to perform:

after executing the parallelization of the scheduling processing by generating one processing thread per each UE sublist and conducting at least a part of the scheduling processing for each UE sublist in the corresponding processing thread, joining outputs of each of the processing threads for forming a single processing thread considering all UEs combined in one single UE sublist, and
allocating remaining communication resources being left unused in any of the parallel processing threads to UEs in the single UE sublist.

According to a further aspect 37, the apparatus according to aspect 36, wherein the instructions, when executed by the at least one processor, cause the apparatus at least to perform:

executing, after allocating the remaining communication resources, a further parallelization of scheduling processing by generating one processing thread per each UE sublist according to the generated two or more UE sublists, and conducting a scheduling processing for each UE sublist in the corresponding processing thread after the further parallelization.

According to a further aspect 38, the apparatus according to any of aspects 22 to 37, wherein the instructions, when executed by the at least one processor, cause the apparatus at least to perform:
conducting, in each generated processing thread per each UE sublist, at least one of the following:

calculating a final modulation and coding scheme,
calculating a transmission power,
conducting a post-frequency division processing.

According to a further aspect 39, the apparatus according to any of aspects 22 to 38, wherein the instructions, when executed by the at least one processor, cause the apparatus at least to perform:
providing a result of each processing thread per each UE sublist to a physical layer for transmission processing according to a scheduling result.

According to a further aspect 40, the apparatus according to any of aspects 22 to 39, wherein one or more of the following points applies:

the number of the plurality of UEs and the number of UEs to be placed into a UE sublist are determined beforehand in accordance with a processing capacity usable per each processing thread;

each processing thread is executed by one of a respective core of a central processing unit of system on chip architecture, a respective hyperthread, or a respective arithmetic logic unit pipeline; or

the apparatus is comprised in a packet scheduler of a communication network control element or communication network control function controlling a communication cell of the communication network.

It should be appreciated that

- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, 6G, Bluetooth, Infrared, and the like may be used; additionally, embodiments may also apply wired technologies, e.g., IP-based access technologies like cable networks or fixed lines;
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler;
- implementation of embodiments is hardware independent and may be implemented using any known or future developed hardware technology or any hybrids of these, such as a microprocessor or CPU (Central Processing Unit), MOS (Metal Oxide Semiconductor), Complementary MOS (CMOS), Bipolar MOS (BiMOS), Bipolar CMOS (BiCMOS), Emitter Coupled Logic (ECL), and/or Transistor-Transistor Logic (TTL);
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described;
- an apparatus may be implemented by a semiconductor chip, a chipset, or a (hardware) module including such chip or chipset;
- embodiments may also be implemented as any combination of hardware and software, such as Application Specific Integrated Circuit (ASIC) components, Field-programmable Gate Arrays (FPGAs) or Complex Programmable Logic Device (CPLD) components or Digital Signal Processor (DSP) components;
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus comprising:

   at least one processor; and
   at least one memory for storing instructions that, when executed by the at least one processor, cause the apparatus at least to perform:

      obtaining information about a plurality of user equipments (UEs) to be scheduled for a communication in a communication network,

generating two or more UE sublists by splitting the plurality of UEs and placing each of the plurality of UEs into at least one UE sublist, the splitting being based on a processing considering an interference parameter, dividing available communication resources of the communication network in accordance with the generated two or more UE sublists and allocating a part of the resources to each of the UE sublist,

executing a parallelization of scheduling processing by generating one processing thread per each UE sublist, and

conducting a scheduling processing for each UE sublist in the corresponding processing thread.

2. The apparatus according to claim 1, wherein the instructions, when executed by the at least one processor, cause the apparatus at least to perform:

conducting a pre-scheduling processing in which a specified number of UEs being eligible for scheduling in each communication slot is selected, wherein the information about the plurality of UEs is obtained as a result of the pre-scheduling processing.

3. The apparatus according to claim 1 or 2, wherein the instructions, when executed by the at least one processor, cause the apparatus at least to perform:

using, for the processing considering the interference parameter used for generating the two or more UE sublists, a processing based on a correlation matrix or a processing based on a beam-to-beam interference parameter.

4. The apparatus according to claim 3, wherein the instructions, when executed by the at least one processor, cause the apparatus at least to perform:

when using, for the processing considering the interference parameter used for generating the two or more UE sublists, a processing based on a correlation matrix,

building a matrix comprising all UEs in the obtained information,

sorting the UEs in a descending order based on a predetermined sorting parameter,

calculating a correlation value across the first two UEs of the sorted UEs,

deciding whether the two UEs can be paired on the basis of a comparison between the determined correlation value and a preset threshold value,

if it is decided that the two UEs can be paired, placing the two UEs into the same UE sublist, and if it is decided that the two UEs cannot be paired, placing the two UEs into different UE sublists,

calculating a correlation value across the third and each following UE of the sorted UEs and each UE contained in each UE sublist, and

placing the following UE in the UE sublists where an average correlation value is smaller.

5. The apparatus according to claim 4, wherein the predetermined sorting parameter is a quality of service class identifier allocated to each UE.

6. The apparatus according to claim 3, wherein the instructions, when executed by the at least one processor, cause the apparatus at least to perform:

when using, for the processing considering the interference parameter used for generating the two or more UE sublists, a processing based on a beam-to-beam interference parameter,

obtaining a predetermined interference parameter defining statically a beam-to-beam interference related to an antenna array network used for communication of the UEs, and

placing a UE in a corresponding one of the two or more UE sublists on the basis of a comparison of the obtained predetermined interference parameter for each UE.

7. The apparatus according to any of claims 1 to 6, wherein the instructions, when executed by the at least one processor, cause the apparatus at least to perform:

when each UE is placed into a UE sublist, checking if any of the two or more UE sublists comprises a higher number of UEs than the others of the two or more UE sublists,

if at least one of the two or more UE sublists comprises a higher number of UEs, conducting a balancing processing for balancing a workload of each processing thread generated per each of the two or more UE sublists to each other.

8. The apparatus according to claim 7, wherein the instructions, when executed by the at least one processor, cause the apparatus at least to perform:

for conducting the balancing processing, checking whether the at least one UE sublist comprising the higher number of UEs includes a UE being identified, as a result of the processing considering the interference parameter for splitting the plurality of UEs, to be placeable also into another UE sublist,
if the check results that there is identified at least one UE being placeable into another UE sublist, changing the identified UE to the other UE sublist for balancing the number of UEs in each UE sublist, and
if the check results that there is identified no UE being placeable into another UE sublist, changing one or more of the last UEs being placed into the UE sublist comprising the higher number of UEs into another UE sublist for balancing the number of UEs in each UE sublist.

9. The apparatus according to any of claims 1 to 8, wherein the instructions, when executed by the at least one processor, cause the apparatus at least to perform:

when each UE is placed into a UE sublist, determining, in each UE sublist, whether there is any UE having a buffer size being greater than a buffer threshold,
if there is determined a UE having a buffer size being greater than the buffer threshold, checking whether the determined UE is pairable with another UE of at least one other UE sublist, based on the processing considering the interference parameter for splitting the plurality of UEs, and,
if the determined UE is pairable with another UE of at least one other UE sublist, placing the determined UE in each of the originally selected UE sublist and the at least one other UE sublist.

10. The apparatus according to claim 9, wherein the instructions, when executed by the at least one processor, cause the apparatus at least to perform:

checking whether a number of UEs being placed in more than one UE sublists is equal to or lower than a predefined threshold,
in case the number of UEs being placed in more than one UE sublists is equal to or lower than the predefined threshold, allow placing the determined UE in each of the originally selected UE sublist and the at least one other UE sublist, or
in case the number of UEs being placed in more than one UE sublists is not equal to or lower than the predefined threshold, stop a processing for placing UEs in each of the originally selected UE sublist and another UE sublist.

11. The apparatus according to any of claims 1 to 10, wherein the instructions, when executed by the at least one processor, cause the apparatus at least to perform:
when dividing the available communication resources of the communication network in accordance with the generated two or more UE sublists, determining the part of the resources to be allocated to each of the UE sublist by considering at least one of the following:

an accumulated amount of data to be transmitted to the UEs in each UE sublist,
presence of traffic having a guaranteed bitrate and traffic having not a guaranteed bitrate, wherein traffic having a guaranteed bitrate is prioritized in resource allocation, or
a determination result of a current buffer size of active UEs, wherein required resources for newly arrived data are estimated.

12. The apparatus according to claim 11, wherein the instructions, when executed by the at least one processor, cause the apparatus at least to perform:

determining whether any UE is present in more than one UE sublist,
and in case there is at least one UE being present in more than one UE sublist, dividing the buffer size of the UE comprised in more than one UE sublist by the number of sublists comprising the UE, and considering the result of the division as the buffer size of the UE for resource allocation processing.

13. The apparatus according to any of claims 1 to 12, wherein the instructions, when executed by the at least one processor, cause the apparatus at least to perform:
conducting, in each generated processing thread per each UE sublist, the following:

a time division scheduling processing,

a multi-user pairing processing in which the UEs contained in one UE sublist are paired on the basis of the interference parameter,
a signal processing related to antenna relay network properties,
a zero-forcing processing,
a beam forming processing,
a frequency division multiplexing processing, or
a resource block group allocation.

14. The apparatus according to claim 13, wherein the multi-user pairing processing is conducted before conducting the a frequency division multiplexing processing.

15. The apparatus according to any of claims 1 to 14, wherein the instructions, when executed by the at least one processor, cause the apparatus at least to perform:

after executing the parallelization of the scheduling processing by generating one processing thread per each UE sublist and conducting at least a part of the scheduling processing for each UE sublist in the corresponding processing thread, joining outputs of each of the processing threads for forming a single processing thread considering all UEs combined in one single UE sublist, and
allocating remaining communication resources being left unused in any of the parallel processing threads to UEs in the single UE sublist.

Fig. 1

Fig. 2

FIG. 3

S410 — OBTAIN INFORMATION ABOUT UEs TO BE SCHEDULED

S420 — GENERATE TWO (OR MORE) UE SUBLISTS BY SPLITTING PROCESS AND PLACE UEs INTO AT LEAST ONE UE SUBLIST, BASED ON INTERFERENCE PARAMETER PROCESSING

S430 — DIVIDE COMMUNICATION RESOURCES AND ALLOCATE PARTS TO RESPECTIVE UE LIST IN ACCORDANCE WITH THE DEMAND

S440 — EXECUTE PARALLELIZATION (FORKING) OF SCHEDULING PROCESSING AND PROVIDE SEPARATE PROCESSING THREAD ON A SEPARATE CPU CORE PER EACH UE LIST

S450 — CONDUCT SCHEDULING PROCESSING IN EACH PROCESSING THREAD

S460 — OUTPUT RESULT OF SCHEDULING PROCESSING

RETURN

Fig. 4

CONTROL ELEMENT (gNB) / PACKET SCHEDULER

300

PROCESSOR/CONTROLLER:

302

TO/FROM
NETWORK

I/O

| UE INFORMATION OBTAINING PORTION | 3001 |
| UE SUBLIST GENERATING PORTION | 3002 |

301

303

TO/FROM
UE

I/O

| COMMUNICATION RESOURCES DIVIDING PORTION | 3003 |
| PARALLELIZATION PORTION | 3004 |
| SCHEDULING PROCESSING CONDUCTING PORTION | 3005 |
| RESULT OUTPUTTING PORTION | 3006 |

MEMORY

304

Fig. 5

Europäisches
Patentamt

European
Patent Office

Office européen
des brevets

# EUROPEAN SEARCH REPORT

Application Number

**EP 23 20 9053**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/344776 A1 (SEN MOUSHUMI [IN] ET AL) 29 October 2020 (2020-10-29) | 1-3,6,7, 11,13 | INV. H04B7/0452 |
| Y | * paragraphs [0006], [0033], [0037], | 14 | H04W72/121 |
| A | [0038], [0051]; figures 2,3 * * paragraphs [0052] – [0056], [0061]; figures 7,8,9,10 * | 4,5, 8-10,12, 15 | |
| | ----- | | |
| Y | CN 102 420 645 A (ZTE CORP) 18 April 2012 (2012-04-18) * paragraphs [0023], [0039] * | 14 | |
| | ----- | | |
| A | US 10 057 916 B2 (COMMSCOPE TECHNOLOGIES LLC [US]) 21 August 2018 (2018-08-21) * column 57, line 25 – line 50 * * column 4, line 48 – line 62 * | 1-15 | |
| | ----- | | |

TECHNICAL FIELDS
SEARCHED        (IPC)

H04B
H04W

The present search report has been drawn up for all claims

| Place of search | Date of completion of the search | Examiner |
|---|---|---|
| Munich | 22 April 2024 | Oana, Andrei |

EPO FORM 1503 03.82 (P04C01)

2

# EP 4 554 104 A1

## ANNEX TO THE EUROPEAN SEARCH REPORT
## ON EUROPEAN PATENT APPLICATION NO.

EP 23 20 9053

22-04-2024

| Patent document cited in search report | | | Publication date | Patent family member(s) | | | Publication date |
|---|---|---|---|---|---|---|---|
| US 2020344776 | A1 | | 29-10-2020 | CN | 111316570 | A | 19-06-2020 |
| | | | | EP | 3701636 | A1 | 02-09-2020 |
| | | | | US | 2020344776 | A1 | 29-10-2020 |
| | | | | WO | 2019081024 | A1 | 02-05-2019 |
| CN 102420645 | A | | 18-04-2012 | NONE | | | |
| US 10057916 | B2 | | 21-08-2018 | AU | 2015274867 | A1 | 05-01-2017 |
| | | | | AU | 2019205993 | A1 | 01-08-2019 |
| | | | | AU | 2021201369 | A1 | 18-03-2021 |
| | | | | AU | 2022201683 | A1 | 31-03-2022 |
| | | | | AU | 2022204338 | A1 | 14-07-2022 |
| | | | | CA | 2951548 | A1 | 17-12-2015 |
| | | | | CA | 3167280 | A1 | 17-12-2015 |
| | | | | CA | 3167284 | A1 | 17-12-2015 |
| | | | | CN | 106797641 | A | 31-05-2017 |
| | | | | CN | 113490283 | A | 08-10-2021 |
| | | | | EP | 3152970 | A2 | 12-04-2017 |
| | | | | EP | 3657882 | A1 | 27-05-2020 |
| | | | | EP | 4213564 | A1 | 19-07-2023 |
| | | | | ES | 2791352 | T3 | 04-11-2020 |
| | | | | ES | 2948776 | T3 | 18-09-2023 |
| | | | | US | 2016037550 | A1 | 04-02-2016 |
| | | | | US | 2018352561 | A1 | 06-12-2018 |
| | | | | US | 2020092901 | A1 | 19-03-2020 |
| | | | | US | 2021314975 | A1 | 07-10-2021 |
| | | | | WO | 2015191530 | A2 | 17-12-2015 |

EPO FORM P0459

For more details about this annex : see Official Journal of the European Patent Office, No. 12/82